# EUROPEAN PATENT APPLICATION

(11) **EP 4 661 324 A1**
(43) Date of publication of application: **10.12.2025**
(21) Application number: 25181667.4
(22) Date of filing: 10.06.2025
(51) Int. Cl.: H04L 1/08, H04W 4/70, H04W 52/48

(54) **APPARATUS AND METHOD FOR PERFORMING D2R AND R2D TRANSMISSIONS IN AMBIENT IOT SYSTEM**

(30) Priority: 07.06.2024 US 202463657539 P; 30.07.2024 US 202463677312 P; 05.06.2025 US 202519229417
(71) Applicant: Samsung Electronics Co., Ltd., Suwon-si, Gyeonggi-do 16677 (KR)
(72) Inventor: FOUAD, Yaser Mohamed Mostafa Kamal, San Jose, CA, 95134 (US); ZHOU, Yuhan, San Jose, CA, 95134 (US); SARTORI, Philippe Jean Marc Michel, San Jose, CA, 95134 (US)
(74) Representative: Kuhnen & Wacker Patent- und Rechtsanwaltsbüro PartG mbB

(57) **Abstract**

Apparatus and methods are disclosed for performing D2R and R2D transmission in an ambient IoT system. A method performed by an ambient IoT device includes receiving (1301), from a reader, a control indication to trigger a D2R transmission; identifying (1302) a number of base retransmissions to perform for the D2R transmission; performing (1303) an initial transmission of the D2R transmission; and performing (1304) base retransmissions of the D2R transmission based on the number of base retransmissions. Consecutive base retransmissions among the base retransmissions of the D2R transmission are separated from each other by a time domain interval based on a CW energy harvesting ability of the ambient IoT device.

## Description

### TECHNICAL FIELD

The disclosure generally relates to ambient Internet of things (IoT) systems. More particularly, the subject matter disclosed herein relates to improvements to power saving and collision reduction in ambient IoT systems.

### SUMMARY

In ambient IoT systems, an expectation is that a significantly large number of ambient IoT devices will be deployed. These ambient IoT devices are expected to be much cheaper than narrowband (NB) IoT devices and thus are order(s) of magnitude simpler than their NB-IoT counterparts.

The 3^{rd} generation partnership project (3GPP) has categorized ambient IoT devices by their energy storage capacity and their capability of generating radio frequency (RF) signals for transmissions into 3 categories as follows:
A. Device Type-1: ~1 µW peak power consumption, has energy storage, initial sampling frequency offset (SFO) up to 10X parts per million (ppm), neither downlink (DL) nor uplink (UL) amplification in the device. The device's UL transmission is backscattered on a carrier wave (CW) provided externally.
B. Device Type-2a: ≤ a few hundred µW peak power consumption, has energy storage, initial SFO up to 10X ppm, both DL and/or UL amplification in the device. The device 's UL transmission is backscattered on a CW provided externally.
C. Device Type-2b: ≤ a few hundred µW peak power consumption, has energy storage, initial SFO up to 10X ppm, both DL and/or UL amplification in the device. The device 's UL transmission is generated internally by the device.

For all device categories (i.e., A, B and C), it is expected that a device will be able to demodulate control and data from a relevant entity in a radio access network (RAN) (e.g., a user equipment (UE) or a gNodeB (gNB)) according to the underlying topology.

Ambient IoT devices are expected to operate in different environments (e.g., outdoor and indoor) and to support a wide range of communication distances (e.g., large distances for outdoor applications and small distances for indoor applications). In order to meet these expectations, several topologies have been introduced in 3GPP to enable IoT devices to communicate with the network:
Topology 1: Base station (BS) ↔ Ambient IoT device

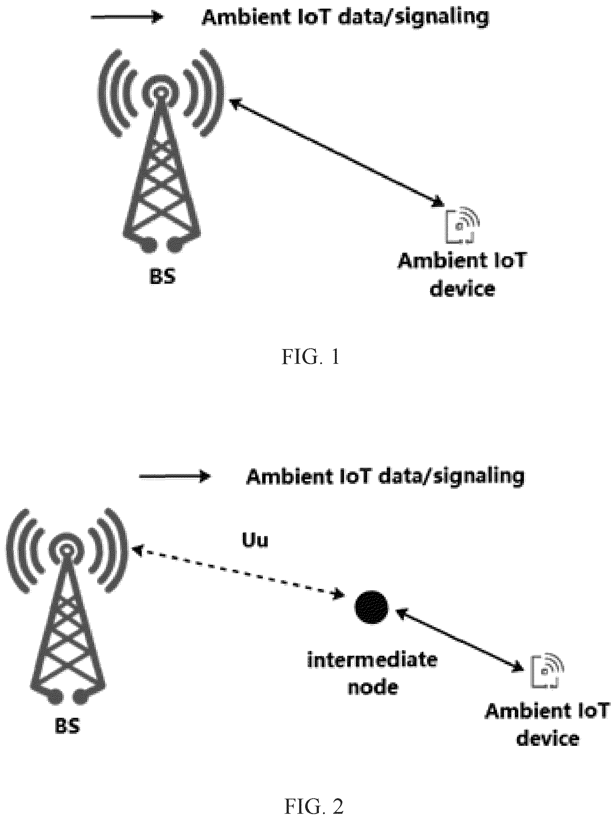

FIG. 1 illustrates an example of ambient IoT topology 1.

Referring to FIG. 1, an ambient IoT device directly communicates with a BS. This communication is bidirectional with no assistance node therebetween. In addition, a UE can receive from one BS and respond to another one.
Topology 2: BS ↔ intermediate node ↔ Ambient IoT device

FIG. 2 illustrates an example of ambient IoT topology 2.

Referring to FIG. 2, an intermediate node (e.g., a relay, integrated access and backhaul (IAB) node, a UE, a repeater, etc.) is provided, which facilitates communication between an ambient IoT device and a BS. The communication between the ambient IoT device and the intermediate device is bidirectional.
Topology 3: BS ↔ assisting node ↔ Ambient IoT device ↔ BS

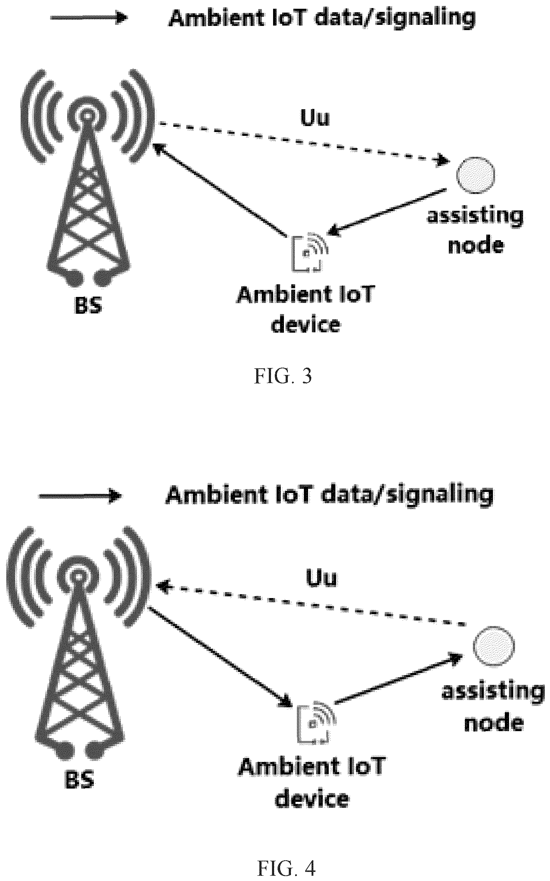

FIG. 3 illustrates an example of ambient IoT topology 3 with DL assistance, and FIG. 4 illustrates an example of ambient IoT topology 3 with UL assistance.

Referring to FIGs. 3 and 4, an intermediate node is provided, which facilitates communication between an ambient IoT device and a BS, similar to Topology 2. However, a key difference is that the communication with the intermediate node is not bidirectional.

For example, in case of UL assistance as illustrated in FIG. 4, the ambient IoT device receives DL communication directly from the BS while sending only UL communication through the intermediate node.
Topology 4: UE ↔ Ambient IoT device

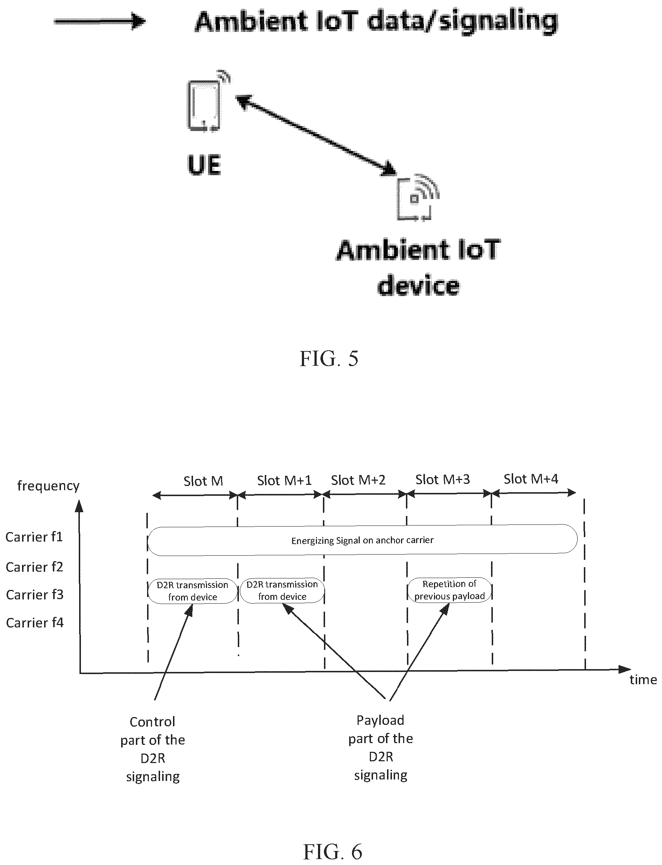

FIG. 5 illustrates an example of ambient IoT topology 4.

Referring to FIG. 5, there is no BS involvement and communication is bidirectional between an ambient IoT device and a nearby UE.

In ambient IoT systems, it is expected that a relatively large number of low-end devices will attempt to communicate with a reader, e.g., in device to reader (D2R) transmissions. To combat channel conditions and improve link reliability, these devices may be configured to perform multiple repetitions/re-transmissions such that their transmitted signal can be received by the reader. However, due to the expected large number of these devices, resources used for D2R transmissions should be carefully selected to avoid incurring large interference levels. In addition, since some of ambient IoT devices perform energy harvesting before transmitting (e.g., Type-2a devices), a separation between consecutive re-transmissions and the number of retransmissions should be carefully selected.

To overcome these types of issues, systems and methods are described herein for improving reliability of ambient IoT systems through resource scheduling, CW transmission based on local measurements and signaling as triggers for transmission, and relaying to nearby devices.

Accordingly, an aspect of the disclosure is to provide a method for utilizing frequency diversity techniques to avoid scenarios wherein an ambient IoT device is in a deep fade.

Another aspect of the disclosure is to control a number of re-transmissions performed by an ambient IoT to avoid flooding a system with a large number of re-transmissions, which can subsequently deteriorate system performance through interference.

Another aspect of the disclosure is to provide relaying techniques to improve a reader's ability to reach ambient IoT devices that are relatively far away.

In an embodiment, a method performed by an ambient IoT device is provided. The method includes receiving, from a reader, a control indication to trigger a device to reader (D2R) transmission; identifying a number of base retransmissions to perform for the D2R transmission; performing an initial transmission of the D2R transmission; and performing base retransmissions of the D2R transmission based on the number of base retransmissions. Consecutive base retransmissions among the base retransmissions of the D2R transmission are separated from each other by a time domain interval based on a carrier wave (CW) energy harvesting ability of the ambient IoT device.

In an embodiment, an ambient IoT device is provided, which includes a transceiver; and a processor configured to receive, from a reader, a control indication to trigger a D2R transmission, identify a number of base retransmissions to perform for the D2R transmission, perform an initial transmission of the D2R transmission, and perform base retransmissions of the D2R transmission based on the number of base retransmissions. Consecutive base retransmissions among the base retransmissions of the D2R transmission are separated from each other by a time domain interval based on a CW energy harvesting ability of the ambient IoT device.

### BRIEF DESCRIPTION OF THE DRAWING

In the following section, the aspects of the subject matter disclosed herein will be described with reference to exemplary embodiments illustrated in the figures, in which:
FIG. 1 illustrates an example of ambient IoT topology 1;
FIG. 2 illustrates an example of ambient IoT topology 2;
FIG. 3 illustrates an example of ambient IoT topology 3 with DL assistance;
FIG. 4 illustrates an example of ambient IoT topology 3 with UL assistance;
FIG. 5 illustrates an example of ambient IoT topology 4;
FIG. 6 illustrates an example of repetitions being applied to a payload portion of a D2R transmission, according to an embodiment;
FIGs. 7A and 7B are flow charts illustrating a method performed by an ambient IoT device for retransmission on a D2R link, according to an embodiment;
FIGs. 8A and 8B are flow charts illustrating a method performed by a reader or an intermediate node for dynamic and semi-static selection of a time separation between D2R (re)-transmissions, according to an embodiment;
FIG. 9 illustrates an example of applying frequency hopping by ambient IoT devices, according to an embodiment;
FIG. 10 illustrates an example of a reader using an early indication to cancel future retransmissions by an ambient IoT device, according to an embodiment;
FIG. 11 illustrates an example of reducing a number of preambles and postambles to preserve resources for adjacent TB retransmissions, according to an embodiment;
FIG. 12 illustrates an example of ambient IoT devices performing relaying, according to an embodiment;
FIG. 13 is a flow chart illustrating a method performed by an ambient IoT device, according to an embodiment;
FIG. 14 is a block diagram of an electronic device in a network environment, according to an embodiment; and
FIG. 15 shows a system including a UE and a gNB in communication with each other, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

Herein, a transmission from an ambient IoT device to a source (or reader), such as a gNB, may be referred to as a D2R transmission, and a transmission from a source (or reader) to an ambient IoT device may be referred to as a reader to device (R2D) transmission.

### A. Resource allocation for D2R repetitions

1. As described above, multiple D2R repetitions or re-transmission may be performed to ensure that a reader receives a signal from an ambient IoT device. However, to realize the gains of D2R repetitions, these repetitions should not overwhelm a system, e.g., by increasing collisions. For example, if D2R repetitions result in excessive collisions, then observed interference may impede system performance and power gains from combining the repetitions may be nullified. This type of scenario is different from that of cellular networks, wherein, in a high density deployment, a number of UEs present is expected to be relatively small and thus having a high number of repetitions does not necessarily lead to excessive collisions. However, for ambient IoT scenarios, even in dense cell deployments, wherein a large number of ambient IoT devices are still expected to still be present, a large number of collisions may occur, thereby deteriorating system performance. In addition, as ambient IoT devices are expected to have limited capabilities (e.g., limited transmission power due to relying on backscattering), the overall operations of these devices may suffer from a non-favorable link budget, which would require a large number of repetitions.

In addition, if repetitions sent by the ambient IoT devices are consecutive or very close in time, gains from repetitions may not be fully realized.

More specifically, if repetitions are consecutive in time, a type 2a device, for example, may not be able to perform energy harvesting in between transmissions, thus limiting its ability to perform power amplification on the retransmissions. Additionally, separating repetitions in time increases a window for resource selection, thus reducing the chances of collisions between neighboring ambient IoT devices. Accordingly, performing non-adjacent repetitions may better realize gains of D2R repetitions.

According to an embodiment of the disclosure, resources used to perform D2R repetitions may be selected in various ways, such as through (pre)-configuration or scheduled approaches.

### (Pre)-configuration:

In this approach, an ambient IoT device can be pre-configured, e.g., through factory settings prior to deployment, or can be configured after deployment through R2D control signaling (e.g., in a physical reader to device channel (PRDCH)) with a transmission pattern. In this case, when performing D2R transmissions, the ambient IoT device may select resources for the transmissions based on this pattern. The pattern can be dependent on multiple parameters including an ambient IoT device identifier (ID), a device type (e.g., a Device Type-2a can have a pattern set with longer separations to allow for energy harvesting than patterns used by other device types), underlying application, etc.

### Scheduled approach:

In this approach, a reader, e.g., a base station or gNB, can schedule multiple resources for D2R transmissions. In particular, when the reader is a gNB, DL control information (DCI) can be sent by the gNB to schedule a first transmission and subsequent retransmissions. Alternatively, when the reader is an intermediate node, e.g., a relay node or a UE, the scheduled D2R transmission and its retransmissions can be scheduled through sidelink control information (SCI) signaling in a 1^{st} or 2^{nd} stage SCI. The scheduling can also be performed using the PRDCH in which the control signaling indicates future resources to be used by the device for the D2R transmission.

For example, the content of a scheduling signal may include an indication of a number of repetitions, a separation indication, a time resource indicator value (TRIV) field, and/or a frequency resource indicator value (FRIV) field.

More specifically, a bitmap can be used to indicate a number of repetitions. Alternatively, a codepoint can be used to indicate the number of repetitions of a transport block (TB).

Using a separation indication, a reader can indicate whether repetitions are adjacent or there is a separation between subsequent repetitions.

A reader can also provide time resources using one or more TRIV fields for one or more retransmission along with a first transmission. In addition, a reader can provide one or more FRIV fields to indicate a frequency shift to be applied by an ambient IoT device.

FIG. 6 illustrates an example of repetitions being applied to a payload portion of a D2R transmission, according to an embodiment.

Referring to FIG. 6, a control part of the D2R signaling is transmitted on carrier f3 at slot M and a payload part is transmitted on carrier f3 at slot M+1. Thereafter, the payload part is retransmitted, i.e., repeated, on carrier f3 at slot M+3, after separation of one slot, i.e., M+2.

As illustrated in FIG. 6, TB-level repetitions are applied only to a payload part of the D2R. In other words, for the D2R control signaling, a lower code rate can be used to protect the D2R transmissions. Alternatively, bit-level or chip-level repetitions can be considered for the D2R control signaling. This is mainly based upon there being fewer bits of the D2R control signaling than in the data portion.

To simplify scheduling and reduce the signaling overhead, a schedule may be in the form of an initial transmission and a separation in the time domain, as well as a number of repetitions. For example, a reader can indicate a resource X for an initial transmission, and a separation of Y slots followed by Z repetitions.

Further, a number of repetitions can be already known by a reader and a device and thus only a resource for an initial transmission and a separation value may be scheduled by the reader.

Alternatively, a number of repetitions can be based on measurements performed by an ambient IoT device and conveyed to a reader through D2R signaling.

A number of repetitions may also depend on various aspects, such previous measurements, device type and/or power level, payload size and/or transmission type/priority, duration since last transmission, location with respect to a reader, reader type, etc.

### Previous measurements:

A number of D2R repetitions can be selected based on previous measurements performed on an R2D link or a D2R link. For example, if a measured signal strength of a link is greater than a threshold, then a lower number of repetitions can be considered to improve resource utilization, whereas a measured signal strength below the threshold can trigger a higher number of repetitions. A measured signal strength can be performed by an ambient IoT device on an R2D link or by a reader on an R2D link and conveyed to the ambient IoT device in R2D control signaling.

### Device type and power level:

A Device Type-1 might be configured with a larger number of repetitions whereas a Device Type-2a might be configured with a smaller number of repetition due to its power amplification capability. In addition, a Device Type-2a with a lower or no amplification capability might be required to perform a number of repetitions similar to that of the Device Type-1. In this case, an indication may be provided in a first transmission in order to indicate a number of repetitions for subsequent transmissions.

### Payload size and transmission type/priority:

A number of repetitions may depend on a payload size and/or type. For example, asset tracking can be configured with X number of repetitions, whereas indoor commands can be allocated a pre-configured number of repetitions. Similarly high priority traffic can be configured with a larger of number of repetitions than lower priority traffic.

### Duration since last transmission:

A number of repetitions may depend on a duration since a last transmission. For example, the longer the duration between two subsequent transmissions, the larger the number of repetitions can be considered. This may be based on the availability of power for transmission. That is, if a separation is too short, an ambient IoT device may not have sufficient power to perform power amplification for a larger number of repetitions.

### Location with respect to a reader:

A number of repetitions may depend on a location of an ambient IoT device with respect to a reader. For example, devices that are farther away from the reader can be assigned a larger number of repetitions than closer ones. In such a case, the reader can indicate the different number of repetitions in R2D control signaling based on the relative location of the ambient IoT device.

### Reader type:

A number of repetitions may depend on a reader type. For example, when the reader is an intermediate node (e.g., a UE) it may be able to provide less amplification (e.g., lower antenna gain) than a gNB and thus a higher number of repetitions may be configured for a reliable transmission. In this case, the reader can indicate its type when performing the resource allocation and accordingly the device can identify the number of repetitions to use for the D2R transmission.

According to an embodiment, transmissions performed by ambient IoT devices can be divided into an initial transmission, a base retransmission, and an additional retransmissions.

An initial transmission is a first attempt to send a TB on a D2R link.

Based on pre-configuration, an initial transmission may have a higher transmission power than subsequent transmission, i.e., base and additional retransmissions. For example, this may occur for a Device Type-2a, which may have accumulated a relatively large amount of power through energy harvesting before the initial transmission.

A transmission (or transmit) power of an initial transmission may be dynamic. In particular, transmission power of an initial transmission can be selected by an ambient IoT device randomly or based on various factors such as measurements performed by the device on R2D signaling (e.g., R2D control signaling in PRDCH or CW signal strength), a device type, a device energy storage level, a device location, a payload size and/or its priority, a reader type, etc.

Alternatively, transmission power of an initial transmission can be selected by a reader based on measurements performed on a D2R link. In this case, the reader can indicate the transmission power to use to the ambient IoT device in R2D control signaling. For example, the reader can use code points or a bitmap to indicate a transmission power from a set of (pre)-configured values.

A base retransmission is automatically transmitted by an ambient IoT device unless an early termination message is provided from a reader. In other words, these retransmissions can be considered as blind repetitions that convey a TB correctly to a reader.

The number of base retransmissions to be performed can be dependent on various factors such a device type, a payload size and/or its priority, channel quality as measured by a reader, a device location with respect to the reader, a reader type (e.g., intermediate node or a gNB), etc. The number of base transmissions can be either selected by the ambient IoT device from a set of (pre)-configured values or can be configured by a reader to the ambient IoT device through control signaling. For example, a bitmap can be used to indicate a value from among a pre-defined/(pre)-configured set.

Unlike a base retransmission, an additional retransmission is performed on demand, in in response to feedback (e.g., an ACK/NACK) from a reader. The number of additional transmissions can be (pre)-configured or directly indicated to an ambient IoT device in R2D control signaling. The selection of the number of additional transmissions can depend on multiple factors including a device type, a payload size and/or priority, channel quality as measured by the reader, device location with respect to the reader, a reader type (e.g., intermediate node or a gNB), etc.

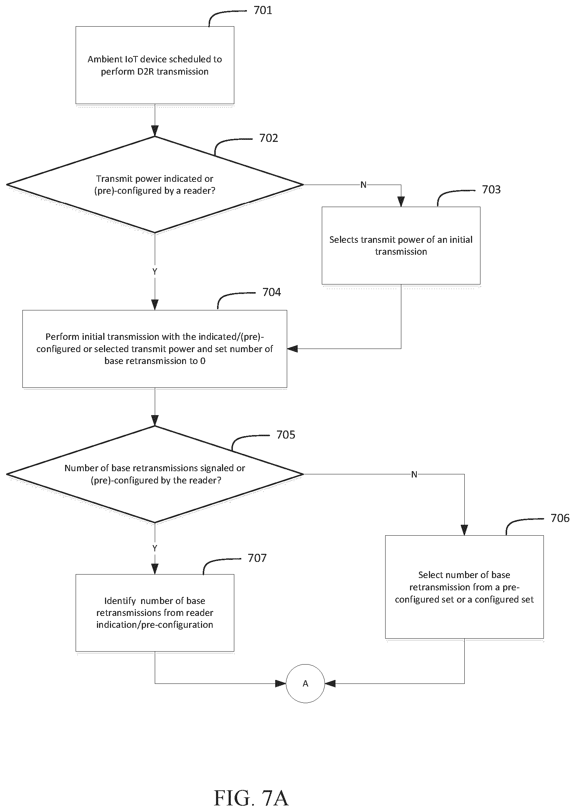

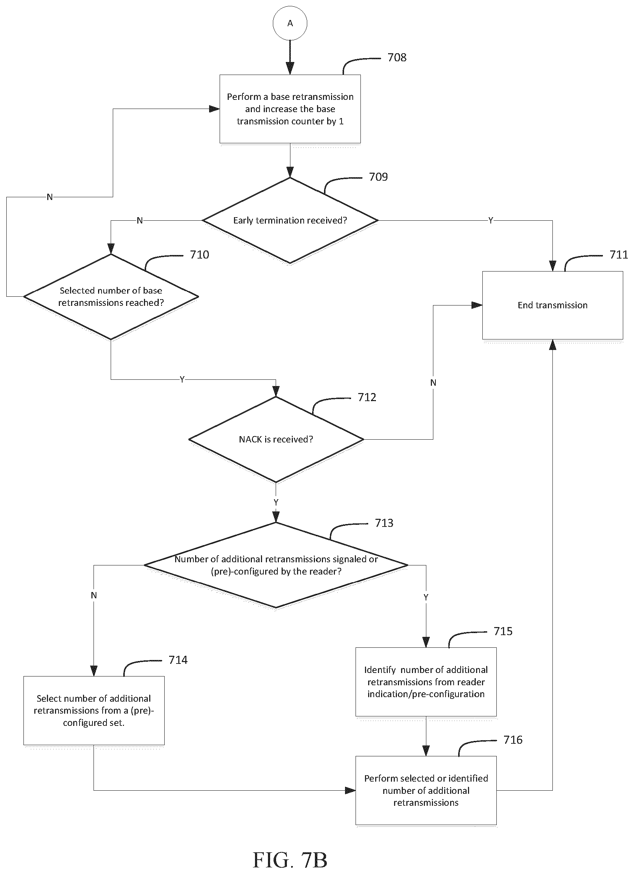

FIGs. 7A and 7B are flow charts illustrating a method performed by an ambient IoT device for retransmission on a D2R link, according to an embodiment.

Referring to FIG. 7A, in step 701, an ambient IoT device is scheduled to perform a D2R transmission.

In step 702, the ambient IoT device determines if a transmit power for the D2R transmission, i.e., an initial transmission, has been indicated or (pre)-configured by a reader, e.g., a gNB. For example, the ambient IoT device may receive an indication of the transmit power in R2D control signaling.

In response to determining that transmit power has not been indicated or (pre)-configured by the reader in step 702, the ambient IoT device selects a transmit power for the initial transmission in step 703. As described above, the transmit power of an initial transmission can be selected by the ambient IoT device randomly from an available transmit power range or based on various factors such as measurements performed by the device on R2D signaling (e.g., R2D control signaling in PRDCH or CW signal strength), a device type, a device energy storage level, a device location, a payload size and/or its priority, a reader type, etc.

In step 704, after determining that transmit power has been indicated or (pre)-configured by the reader in step 702 or selecting a transmit power for the initial transmission in step 703, the ambient IoT device performs the initial transmission with the indicated/(pre)-configured or selected transmission power and sets a number of base retransmission counter to 0.

In step 705, the ambient IoT device determines if a number of base retransmissions to be performed has been indicated or (pre)-configured by the reader.

In response to determining that the number of base retransmissions to be performed has not been indicated or (pre)-configured by the reader in step 705, in step 706, the ambient IoT device selects a number of base retransmission from a set of values that may be (pre)-configured prior to deployment or configured after deployment, e.g., through RRC signaling by the reader. As described above, this selection can be random or based on one or more parameters, e.g., a device type, a payload size and/or its priority, channel quality as measured by a reader, a device location with respect to the reader, a reader type (e.g., intermediate node or a gNB), etc.

In response to determining that the number of base retransmissions be performed has been indicated or (pre)-configured by the reader in step 705, the ambient IoT device identifies the number of base retransmission based on the indication or (pre)-configured by the reader from reader in step 707.

Referring to FIG. 7B, in step 708, after selecting or identifying the number of base retransmission in step 706 or 707, the ambient IoT device performs a base retransmission and increases the base retransmission counter by 1.

In step 709, the ambient IoT device determines if an early termination message is received form the reader. As described above, the base retransmissions are automatically transmitted by the ambient IoT device unless an early termination message is provided from the reader. For example, an early termination message may be transmitted by a reader when an initial transmission and./or previous base transmission are successfully received by the reader, such that additional base transmissions are no longer needed.

Accordingly, if an early termination message is received form the reader in step 709, then the ambient IoT device ends the D2R transmission in step 711. However, if an early termination message is not received form the reader in step 709, then the ambient IoT device determines if the selected or identified number of base retransmissions has been reached in step 710.

If the selected or identified number of base retransmissions has not been reached in step 710, then process returns to step 708, wherein the ambient IoT device performs another base retransmission and increases the base retransmission counter by 1 again.

As illustrated in FIG. 7B, steps 708 to 710 will be repeated until the selected or identified number of base retransmissions has been reached in step 710 or an early termination message is received in step 709.

After determining that the selected or identified number of base retransmissions has been reached in step 710, the ambient IoT device determines if a NACK is received from the reader in step 712.

In response to determining that a NACK has not been received (or that an ACK has been received) from the reader in step 712, the ambient IoT device ends the D2R transmission in step 711. That is, if no NACK is received or an ACK is received from the reader, the ambient IoT device knows that the base retransmissions have been successfully received by the reader, and no additional retransmission are needed.

However, in response to determining that a NACK has been received (or that an ACK has not been received) from the reader in step 712, the ambient IoT device determines if a number of additional retransmissions to be performed has been indicated or (pre)-configured by the reader in step 713.

In response to determining that the number of additional retransmissions to be performed has not been indicated or (pre)-configured by the reader in step 713, the ambient IoT device selects a number of additional retransmission from a (pre)-configured set in step 714. As described above, this selection can be random or based on one or more parameters, e.g., a device type, a payload size and/or its priority, channel quality as measured by a reader, a device location with respect to the reader, a reader type (e.g., intermediate node or a gNB), etc.

In response to determining that the number of additional retransmissions be performed has been indicated or (pre)-configured by the reader in step 715, the ambient IoT device identifies the number of additional retransmission based on the indication or (pre)-configured by the reader from reader in step 715.

In step 716, the ambient IoT device performed the selected or identified number of additional retransmission, and thereafter, then the ambient IoT device ends the D2R transmission in step 711.

Although not illustrated in FIG. 7B, similar to steps 709 and 710, the ambient IoT device may also check for an early termination message before each additional retransmission.

According to an embodiment, a separation between any two (re)-transmissions can be configured semi-statically to an ambient IoT device and used for subsequent transmissions. In this case, the separation can be based on a device type (e.g., a Device Type-2a can have a value that is different than a Device Type-1 device since the latter does not need time to charge the onboard energy source) or the separation can be configured to each device separately. When a semi-static separation is applied, the separation may remain the same until it is updated by a reader, e.g., using R2D control signaling (e.g., by sending an updated separation in a PRDCH).

According to another embodiment, a separation between repetitions can be dynamically selected by a reader. In this approach, the reader can dynamically indicate the separation between ambient IoT device repetitions, e.g., using DCI signaling in case of a gNB or using SCI signaling in case of an intermediate node, or the reader can use a bitmap to indicate a separation from a set of pre-configured values in R2D control signaling sent in a PRDCH.

This type of dynamic approach may account for a device's ability to harvest energy. For example, the ability of a Device Type-2a to harvest energy can be based on the device's location. In particular, a Device Type-2a that is relatively closer to a CW source will be able to harvest more energy and thus will require less time separation. On the other hand, a Device Type-2a this relatively farther away from the CW source would require more time for energy harvesting and thus the separation between subsequent repetitions might need to be longer.

In addition, device mobility may affect a Device Type-2a ability to perform energy harvesting as it changes a relative distance between the ambient IoT device and the CW source. Hence, it may be helpful for an ambient IoT device to indicate the separation between consecutive repetitions to a reader, when it is selected by the A-IoT device. However, when a reader selects the time separation during resource scheduling, it should consider the device type, location, energy harvesting capability, etc.

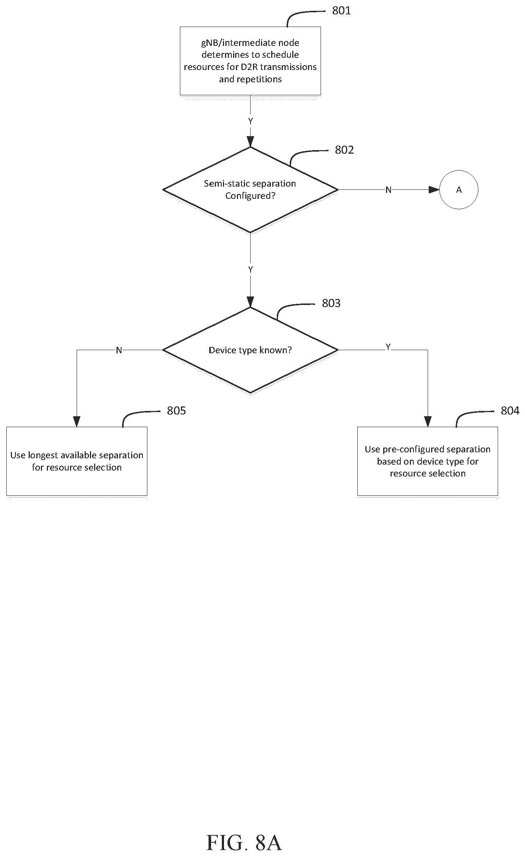

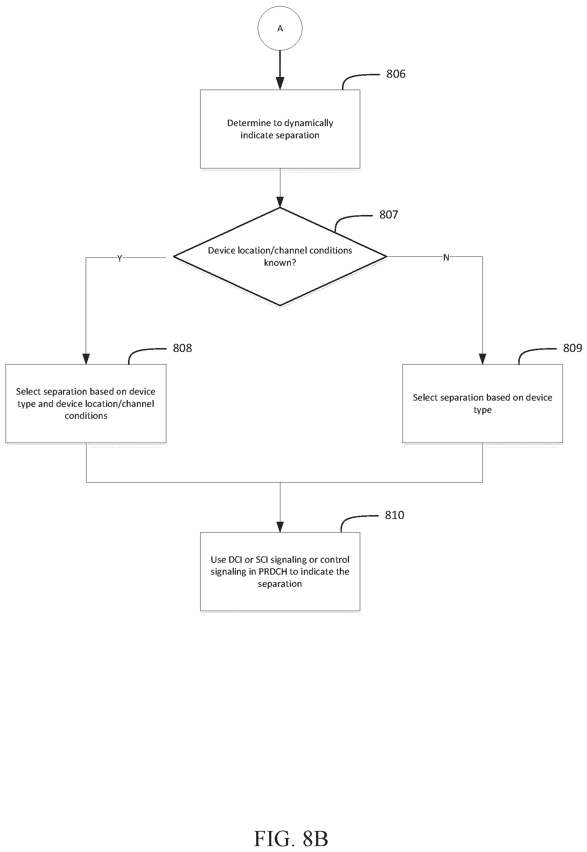

FIGs. 8A and 8B are flow charts illustrating a method performed by a reader or an intermediate node for dynamic and semi-static selection of a time separation between D2R (re)-transmissions, according to an embodiment.

Referring to FIG. 8A, in step 801, a reader, e.g., a gNB, or an intermediate node determines to schedule resources for an ambient IoT device for D2R transmissions and repetitions.

In step 802, the reader or intermediate node determines if semi-static separation is configured for the ambient IoT device.

In response to determining that semi-static separation is configured for the ambient IoT device in step 802, the reader or intermediate node determines if a device type of the ambient IoT device is known in step 803.

In response to determining that the device type of the ambient IoT device is known in step 803, the reader or intermediate node uses the pre-configured separation for resource selection in step 804. That is, in response to determining that the device type of the ambient IoT device is known in step 803, the reader or intermediate node uses a pre-configured separation based on the known device type when selecting the resources for consecutive (re)-transmissions in step 804.

In response to determining that the device type of the ambient IoT device is not known in step 803, the reader or intermediate node uses a longest available separation for resource selection in step 805. Using the longest available separation for resource selection may allow for the ambient IoT device to perform sufficient energy harvesting, even without know the device type of the ambient IoT device.

Referring to FIG. 8B, in response to determining that semi-static separation is not configured for the ambient IoT device in step 802, the reader or intermediate node determines to dynamically indicate separation to the ambient IoT device in step 806.

In step 807, the reader or intermediate node determines if device location of the ambient IoT device and/or channel conditions are known.

In response to determining that the device location and/or channel conditions are known in step 807, the reader or intermediate node selects a separation based on the device type of the ambient IoT device and the device location and/or channel conditions in step 808.

However, in response to determining that the device location and/or channel conditions are not known in step 807, the reader or intermediate node selects a separation based on the device type of the ambient IoT device in step 809.

In step 810, the reader or intermediate node indicates the selected separation to the ambient IoT device. More specifically, if the reader is performing the operation, DCI or control signaling in a PRDCH may be used to indicate the separation, but if the intermediate node is performing the operation, SCI signaling or control signaling in a PRDCH may be used to indicate the separation.

According to an embodiment, an ambient IoT device may request a CW transmission from a neighboring node, e.g., when received CW power is not sufficient to perform transmissions at a targeted transmit power level. This may help increase CW signal strength and reduce the energy harvesting time needed by the ambient IoT device. This request may be helpful when a time separation between D2R repetitions is semi-static or when the ambient IoT device is expected to perform multiple D2R transmissions within a short duration. When the CW node is a reader, this request can be conveyed directly to the CW node thorough D2R signaling. For example, a 1-bit field can be added in D2R control signaling to request CW transmissions.

According to an embodiment, request for a CW transmission from a neighboring node may be broadcast or unicast/groupcast.

More specifically, when broadcasting a request to send CW transmissions, the request will be sent to all the neighboring nodes and readers. In this case, the transmission of the CW by the reader/node can be dependent on a measured signal strength of the received D2R request at the reader/node. For example, if the measured signal strength of the D2R request is above a threshold, this may indicate sufficient proximity between the reader/node and the ambient IoT device, thus triggering the CW transmission. The threshold may be configured by a network to all nodes/readers within an area.

When a request to send CW transmissions is unicast/groupcast, the request may be sent to a specific set of a neighboring nodes and readers (i.e., groupcast). For example, this can be done by including a group ID that is preconfigured in the ambient IoT device (e.g., a specific ID can be used to trigger readers of type gNB or an intermediate node) or a group ID that is indicated to the ambient IoT device through R2D control signaling via a PRDCH and can be used to uniquely identify a source of a CW.

Alternatively, each node can send a unique ID in R2D control signaling (i.e., for unicast triggering). In this case, the ambient IoT device may perform measurements on R2D links and accordingly identify a best node/reader with the best channel conditions and accordingly request a CW transmission from the best node/reader.

According to an embodiment, an energy harvesting time may also be reduced by allow an ambient IoT device to request a power increase of a CW. More specifically, an ambient IoT device may perform measurements on R2D control signaling and compare the measurements against a threshold that may be pre-configured or indicated in the R2D control signaling. If the measured signal strength is below the threshold, it may trigger the ambient IoT device to send a CW power increase request. The CW power increase request may be sent in D2R control signaling via a physical data to reader channel (PDRCH) and may also be sent using different cast types (e.g., broadcast, groupcast, or unicast) as described above.

In accordance with the above-described embodiments, an ambient IoT device can be preconfigured or configured through R2D control signaling (e.g., in a PRDCH) with a transmission pattern. Subsequently, when performing its D2R transmissions, the ambient IoT device may select resources for the transmissions based on the transmission pattern.

Additionally, an ambient IoT device may be scheduled one or more resources for subsequent retransmissions of a TB on a PDRCH. For example, this scheduling can be indicated in 1^{st} or 2^{nd} stage SCI in case of an intermediate node or by a DCI in case of a gNB.

A reader can use PRDCH control signaling to schedule one or more resources for subsequent retransmissions of a TB on a PDRCH. For example, the indication of future resources to be used by an ambient IoT device may include a number of repetitions, a separation (e.g., a time duration) between subsequent transmissions, and/or TRIV/FRIV fields indicating time/frequency resources to be used for the D2R transmissions.

A mixture of TB-level and chip/bit-level repetitions can be used for data and control portions of the D2R transmissions, respectively.

A number of TB-level repetitions can be selected by a reader or an ambient IoT device based on various factors, such as previous measurements, a device/reader type, a device's relative location to a reader, a payload size, etc.

A number of TB-level repetitions can be divided into initial transmissions, base retransmissions, and additional retransmissions.

A transmit power of an initial transmission can be different from subsequent retransmissions and can be either indicated or (pre)-configured by a reader or it can be locally selected by an ambient IoT device, e.g., based on previous measurements, a device/reader type, a device's relative location to a reader, a payload size, etc.

A number of base retransmissions may be indicated or (pre)-configured by a reader or may be selected by an ambient IoT device, e.g., based on previous measurements, a device/reader type, a device's relative location to a reader, a payload size, etc.

An ambient IoT device is expected to perform base retransmissions for each TB unless an early termination indication is received from a reader.

Additional retransmissions of a TB are performed by an ambient IoT device based on an indication from a reader (e.g., an ACK/NACK).

A number of additional retransmissions to be performed by an ambient IoT device may be indicated or (pre)-configured by a reader or may be selected by the ambient IoT device, e.g., based on previous measurements, a device/reader type, a device's relative location to a reader, a payload size, etc.

A separation between re-transmissions by an ambient IoT device may be dynamically indicated by a reader or intermediate node (e.g., through DCI, SCI, or PRDCH signaling) or may be semi-statically configured (e.g., through PRDCH signaling or by pre-configuration).

A semi-statically configured separation between re-transmissions may be based on a device type (e.g., Device Type-2a can be configured with a different value than Device Type-1).

A dynamically indicated separation between re-transmissions may be based on a device type, a device location, a device's energy harvesting capability, channel conditions, etc.

An ambient IoT device may send a request for CW transmissions to neighboring nodes in control signaling of a PDRCH.

A request for CW transmissions from neighboring nodes may be broadcast, groupcast, or unicast (e.g., by using a broadcast bit field or by using a specific node ID).

An ambient IoT device may send a request to increase power of a CW transmission of a neighboring node using control signaling of a PDRCH. For example, this request can be based on measurements performed on an R2D channel.

According to an embodiment, a random-based approach is provided, wherein a random resource selection window may be established by (pre)-configuration or a direct indication from a reader (e.g., a UE or a gNB). Subsequently, an ambient IoT device may randomly select a slot from the random resource selection window to perform transmissions and subsequent repetitions. For example, the selection of the slot may be based on various aspects including a device priority, a payload size, a type of transmission (e.g., a transmission or a retransmission), etc.

Unlike scheduled cases, an ambient IoT device may include in D2R control signaling a number of repetitions considered for upcoming D2R transmissions and/or a separation between each two subsequent TB repetitions. This indication can be sent independently from a TB on a control portion of a D2R transmission by using a bitmap/codepoint or a dedicated field.

Alternatively, the indication can be made using specific preambles/postambles. For example, a specific preamble/postamble may indicate that a following transmission will have X repetitions with a separation of Y slots, whereas another preamble/postamble may indicate that upcoming retransmissions will be having X2 repetitions with a separation of Y2 slots. Here, the preamble can be before a D2R payload transmission, whereas the postamble can be after the D2R control signaling transmission. In addition, a number of repetitions for control signaling can be (pre)-configured or can be independently selected from a number of repetitions used for data transmission and thus may not need to be indicated in D2R control signaling. For example, control signaling may have 4 repetitions for reliability, whereas the data may have 2 repetitions.

According to another embodiment, an ambient IoT device may use a backward indication to provide a location of a repetition to a reader. For example, an ambient IoT device may begin by sending an initial transmission to a reader at slot X, and if that transmission was not successfully received, can perform a repetition at slot X+N. Control signaling associated with the repetition sent in slot X+N can indicate that there is another repetition, e.g., the initial transmission, that was previously sent to the reader at slot X, such that they can be combined. For example, if the X+N is detected first, then the initial transmission at slot X can be referred to as a repetition. In this approach, a reader should store received signals within a sliding window in case a backward indication is subsequently received. A duration of the sliding window may be based on pre-configuration. Similar to a scheduled case, a number of randomly selected resources for TB repetitions may depend on various factors, as described above, in addition to a medium congestion level, as described below.

The higher the medium congestion level is, the greater the number of expected collisions is. Hence, it is preferable to reduce a number of repetitions. The medium congestion level may be obtained from a reader based on measurements or may be based on the measurements performed at an ambient IoT device itself. The measurement can be as simple as performing energy detection on OFF symbols within ON/OFF keying to identify the medium congestion level. Alternatively, the measurement may be based on performing energy detection on a pre-defined window duration and accordingly determining the medium congestion level based on the measured energy being above a configured threshold.

In accordance with the above-described embodiments, for random resource selection for D2R transmissions, a number of retransmissions may be indicated to a reader through D2R control signaling, e.g., through a dedicated field.

For random resource selection for D2R transmissions, a number of retransmissions may be indicated to a reader by using a selected set of pre-configured preambles/postambles.

A number of retransmissions of control and data portions of D2R transmissions may be independently selected.

For random resource selection for D2R transmissions, a number of retransmissions may be based on a measured congestion level of a channel.

2. When sending D2R repetitions, the same information may be sent on all repetitions to allow for energy combining or different redundancy versions may be sent on different repetitions, e.g., based on an indication from an ambient IoT device to a reader in D2R control signaling before a TB is transmitted or when the reader schedules repetitions of D2R transmissions. For example, a one-bit field may be added to control signaling to indicate whether the same repetitions or different redundancy versions should be used by the ambient IoT device.

Accordingly, an ambient IoT device may indicate, in D2R control signaling, a configuration to be used for its upcoming retransmissions of a TB (e.g., identical TBs or different redundancy versions).

### B. Frequency hopping among repetitions to utilize frequency diversity

1. Due to channel impairments and relatively low transmission power of ambient IoT devices, D2R transmissions may not be correctly received by a reader. This issue may also be magnified when an ambient IoT device suffers from a deep fade condition. To address these types of issues, according to an embodiment, frequency hopping may be used to achieve frequency diversity when performing D2R transmissions.

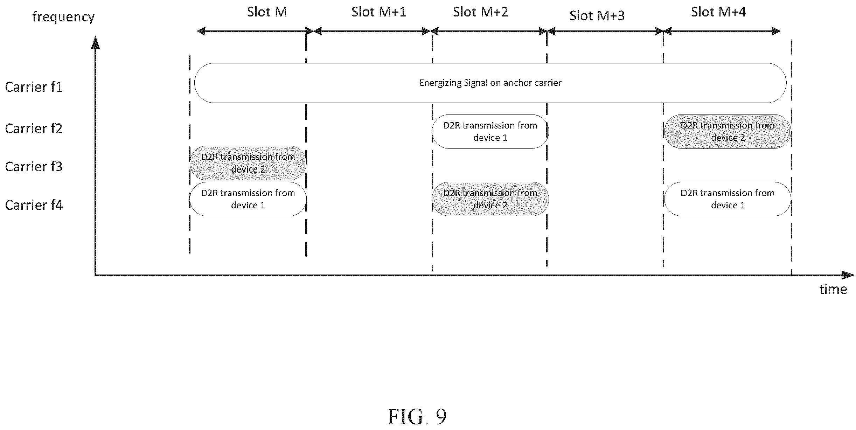

FIG. 9 illustrates an example of applying frequency hopping by ambient IoT devices, according to an embodiment.

Referring to FIG. 9, for each D2R transmission, the ambient IoT devices (i.e., device 1 and device 2) perform multiple repetitions, wherein each repetition is performed on a different frequency according to a selected frequency pattern. More specifically, although both devices transmit in slots M, M+2, and M+4, device 1 transmits using frequency hopping pattern f4, f2, and f4, and device 2 transmits using frequency hopping pattern f3, f4, and f2.

As illustrated in FIG. 9, an ambient IoT device may apply a different frequency shift on each repetition of a D2R transmission. This frequency hopping may be configured, indicated by a reader, or may be selected by the ambient IoT device itself.

### Configured Frequency Hopping:

According to an embodiment, an ambient IoT device may be configured to perform frequency hopping. The configuration may depend on a device type (e.g., only Device Type-2a are allowed to perform frequency hopping).

In addition, a frequency shift employed within the frequency hopping may also be based on a device type. For example, a Device Type-2a may be able to perform a frequency shift that is larger than that done by a Device Type-1.

### Frequency Hopping Triggered By Reader:

According to an embodiment, a reader may indicate, to an ambient IoT device, through R2D control signaling, to apply frequency hopping in upcoming D2R transmissions. The triggering may be based on previous measurements performed on D2R/R2D links. For example, the reader can perform received signal strength indicator (RSSI)/reference signal received power (RSRP)/reference signal received quality (RSRQ) measurements on a measurement window and accordingly trigger frequency hopping for a D2R transmission. The measurement window may be specified or configured and/or may depend on one or more parameters (e.g., device mobility, device type, etc.).

### Frequency Hopping Triggered By Ambient IoT Device:

According to an embodiment, an ambient IoT device may indicate, to a reader, in D2R control signaling, that frequency hopping will be applied on a payload transmission. Alternatively, the indication may be done using specific preambles/postambles. For example, a specific preamble/postamble can indicate that the following transmission will use a frequency hopping pattern X, whereas another preamble/postamble can indicate that upcoming retransmissions will use a frequency hopping pattern Y. Herein, a preamble can be before a D2R payload transmission and a postamble may be after a D2R control signaling transmission.

In addition, to trigger frequency hopping, the ambient IoT device may perform RSSI/RSRP/RSRQ measurements on a measurement window and accordingly trigger the frequency hopping for a D2R transmission. The measurement window may be specified or configured and/or may depend on one or more parameters (e.g., device mobility, device type, etc.).

In accordance with the above-described embodiments, an ambient IoT device may be triggered or pre-configured to perform frequency hopping when perform D2R transmissions.

When applying frequency hopping, an amount of frequency shift may be based on configuration and/or depend on a device type (e.g., Device Type-2a can perform larger frequency shifts than a Device Type11).

A reader may use R2D control signaling in PRDCH, DCI signaling, or SCI signaling to trigger frequency hopping on D2R transmissions. For example, the triggering may be based on previous measurements.

An ambient IoT device may internally trigger frequency hopping and signal the triggering to a reader using D2R control signaling or specific preambles/postambles. For example, the triggering may depend on previous measurements.

2. According to an embodiment, methods are provided herein for selecting a frequency hopping pattern. Here, a frequency hopping pattern applies only to the frequency domain (i.e., frequency domain resources used for each repetition). In the time domain, a separation between consecutive transmissions within the hopping pattern may not be necessarily the same and may also depend on various factors (e.g., a device type). For example, a first transmission and the following two repetitions within a 2-repetition frequency hopping pattern may be performed at slots {X, X+Y, X+Z}, where Y and Z are not equal. The values Y and Z may not be equal for several reasons such as a device's energy harvesting capability and/or channel congestion.

According to an embodiment, when selecting resources for a frequency hopping pattern, scheduled approach or a random selection approach may be utilized.

### Scheduled Approach:

According to an embodiment, a reader may indicate a hopping pattern to be used by an ambient IoT device. In particular, the reader may indicate a frequency shift to be applied by the ambient IoT device for each of the repetitions. The hopping pattern can be signaled as a sequence, bitmap, or an index from a pre-configured or specified table. In addition, the signaling may be carried in in the payload or control signaling of a PRDCH, or may be carried through DCI signaling (when the reader is a gNB) or SCI signaling (when the reader is an intermediate node).

### Random Selection Approach:

According to an embodiment, an ambient IoT device may randomly select a frequency hopping pattern from a set of specified or pre-configured patterns. These patterns may be configured based on device type to account for different device type capabilities. For example, due to its ability to perform larger frequency shifts, a Device Type-2a may a have a wider number of patterns to select from than a Device Type-1, which may have a reduced set of frequency hopping patterns to select from.

After performing random selection, the ambient IoT device may convey the selected hopping pattern to a reader. The hopping pattern may be indicated in D2R control signaling before the ambient IoT device starts to perform its D2R transmissions.

Alternatively, the indication may be done using specific preambles/postambles. For example, a specific preamble/postamble may indicate that a following transmission will be using a frequency hopping pattern X, whereas another preamble/postamble may indicate that upcoming retransmissions will use a frequency hopping pattern Y. Herein, the preamble may be before a D2R payload transmission and a postamble may be after a D2R control signaling transmission.

In accordance with the above-described embodiments, a reader may indicate a sequence to an ambient IoT device. based on which hopping pattern can be selected. The sequence may be indicated in PRDCH control signaling or through DCI/SCI signaling.

An ambient IoT device may randomly select a hopping pattern, e.g., based on previous measurements or a device type. After random selection of the hopping pattern by the ambient IoT device, the selected hopping pattern can be indicated to a reader through PDRCH control signaling or by using specific preambles/postambles.

3. According to an embodiment, methods are provided herein for determining a time domain separation between consecutive transmissions when using in a hopping pattern.

As described above, a separation between consecutive transmissions may vary depending a device type. For example, a Device Type-2a may require more separation to perform energy harvesting and charge its on board energy source than a Device Type-1. In addition, a signal strength of a CW at a Device Type-2a may also affect its ability to harvest energy (e.g., devices closer to a CW node may be able to harvest more energy than devices that are farther away). Hence, a time separation between consecutive re-transmissions may be dynamically indicated by a reader along with a hopping pattern. For example, multiple time separation levels may be pre-configured and a reader can use a bitmap to dynamically select one of the time separation levels using D2R control signaling. Alternatively, the reader can also use a code point to indicate a selected time separation. The selection of the time separation by the reader can be based on an ambient IoT device type, a location of the ambient IoT device, previous measurements performed by a reader on a D2R link, previous measurements performed by an ambient IoT device on an R2D link and reported to a reader, a number of previous D2R transmissions within a previous window (e.g., a window duration can be configured), a D2R channel congestion level due to its impact on interference, etc.

In accordance with the above-described embodiments, a time separation between consecutive retransmissions within a hopping pattern may be dynamically indicated by a reader, e.g., wherein a bitmap/codepoint is used to select a field from a pre-configured set. The selection of the time separation by the reader may depend on various factors, such as an ambient IoT device type, a location of the ambient IoT device, previous measurements performed by a reader on a D2R link, previous measurements performed by an ambient IoT device on an R2D link and reported to a reader, a number of previous D2R transmissions within a previous window (e.g., a window duration can be configured), a D2R channel congestion level due to its impact on interference, etc.

### C. Early cancellation of repetitions by the reader:

1. Non-adjacent TB repetitions may unnecessarily consume resources on a D2R link. More specifically, if a first transmission is successfully received at a reader, then subsequent transmissions may not be needed and thus would merely waste resources. According to an embodiment, to address this type of drawback, a reader may utilize a time separation between consecutive D2R repetitions to send an early termination signaling in order to preserve power of an ambient IoT device, reduce potential interference, and increase resources available for D2R transmissions for neighboring ambient IoT devices.

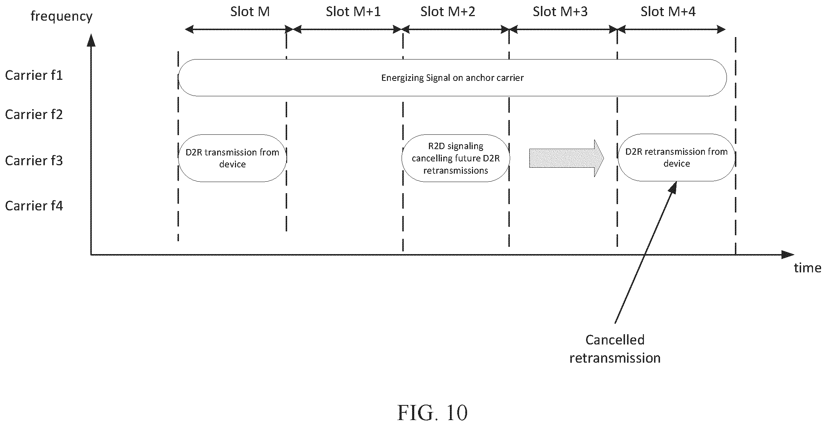

FIG. 10 illustrates an example of a reader using an early indication to cancel future retransmissions by an ambient IoT device, according to an embodiment.

Referring to FIG. 10, an ambient IoT device is performs a transmission (e.g., an initial transmission or a base retransmission) in slot M and is scheduled to perform another transmission, e.g., a base retransmission, in slot M+4. However because a reader receives the transmission in slot M, the scheduled retransmission is unnecessary. Therefore, in order to prevent resource waste, the reader sends an indication for early termination to the ambient IoT device in slot M+2, thereby cancelling the retransmission scheduled for slot M+4.

The indication for early termination may be sent in R2D control signaling and may be a 1 bit indication or a pre-configured/specified preamble indicating the cancellation. The indication for early termination may be sent in a PRDCH, DCI, or SCI signaling from the reader to the ambient IoT device. For example, after performing a D2R transmission, an ambient IoT device may be configured to monitor R2D control signaling or a PRDCH channel for potential termination before a subsequent D2R transmission. The monitoring may be limited to a subset of the time duration between the D2R transmissions in order to reduce power consumption.

In addition, the ambient IoT device may be configured to monitor a specific carrier frequency based on its previously selected resource for a D2R transmission (e.g., 1-to-1 mapping or many-to-1 mapping may be utilized between resources used to carry a last D2R transmission and resources over which an early termination is sent in an R2D channel).

The signaling of an early termination may include a preamble followed by an early termination payload followed by a postamble. The payload may include a bitmap, wherein each bit indicates an early termination for a specific ambient IoT device, or one or more codepoints, each of which providing an early termination indication to a specific ambient IoT device. The mapping between the bitmap/codepoints and the ambient IoT device may depend on time/frequency resources used for their last D2R transmission or may be based on their full/hashed version of temporary/permanent IDs of the ambient IoT devices (e.g., by sending the least significant r bits of an ambient IoT device ID).

In accordance with the above-described embodiments, for time-separated retransmissions at a TB-level, to conserve resources, a reader may signal an early termination when the TB is successively received. The early termination signal may be carried in PRDCH control signaling, DCI signaling (for a gNB), or in SCI signaling (for an intermediate node). The resources over which an early termination signal is sent may depend on an ambient IoT device ID.

### D. Maintaining synchronization for subsequent repetitions:

1. According to an embodiment, methods are provided for maintaining time synchronization when a time separation exists between D2R retransmissions.

In one method, preambles may be used separately on each separate repetition. That is, each repetition may include its own preamble/midamble/postamble for synchronization between an ambient IoT device and a reader. However, when there is no time separation between consecutive repetitions, then the number of preambles, midambles, or postamble may be reduced in order to reduce overhead.

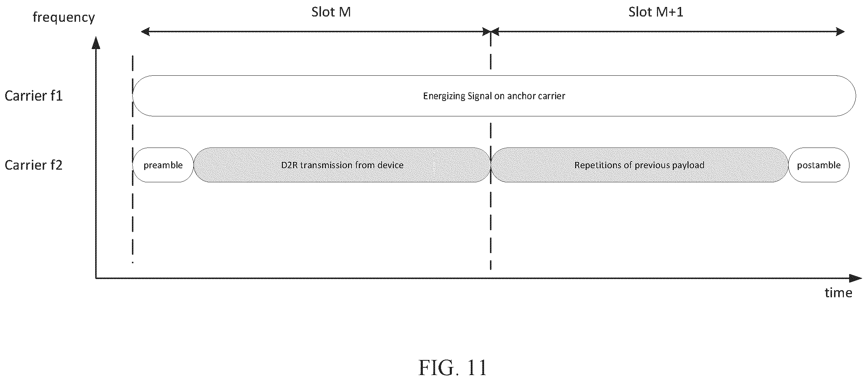

FIG. 11 illustrates an example of reducing a number of preambles and postambles to preserve resources for adjacent TB retransmissions, according to an embodiment.

Referring to FIG. 11, since multiple repetitions with no separation results in a relatively long D2R transmission that may span multiple sequences, time synchronization can be lost, e.g., due to high SFO incurred at ambient IoT devices due to relatively simple low-cost oscillators. To address this, a pre-configured/specified maximum duration between consecutive preamble/midamble/postamble may be implemented. In this case, an ambient IoT device will begin its transmission by a preamble and end with a postamble, and in between there are two midambles, i.e., D2R transmission.

Although FIG. 11 illustrates two midambles between a preamble and a postamble, the disclosure is not limited thereto. Instead, one or more midambles may be included based on the pre-configured/specified maximum duration.

According to the above-described embodiments, for time-separated retransmissions at a TB-level, each repetition may include its own preambles/midambles/postambles for time synchronization. However, for consecutive retransmissions at the TB-level, one preamble at the beginning of a first repetition and one postamble at the end of a last repetition may be used to conserve resources.

### E. Relaying of received repetitions from adjacent devices

1. In some cases, an ambient IoT device may experience bad channel conditions and thus may be unable to reach a reader (e.g., a gNB or an intermediate device). To address such cases, according to an embodiment, a multi-hop scenario may be utilized in which the ambient IoT device may rely on neighboring ambient IoT devices to reach the reader. That is, the ambient IoT device may request its neighboring ambient IoT devices message to relay a message from the ambient IoT to the reader.

Alternatively, a request for relaying can also come from the reader. For example, by using R2D control signaling, the reader may request for one or more neighboring ambient IoT devices to perform relaying, thus increasing coverage.

A relaying trigger may include a relaying device ID and device IDs of the neighboring ambient IoT devices that will have their signals relayed.

According to an embodiment, relaying may be performed based on back-scattering from neighboring ambient IoT devices without consuming their power.

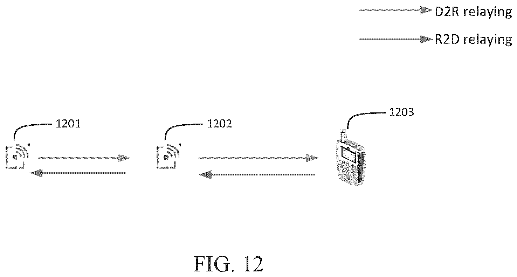

FIG. 12 illustrates an example of ambient IoT devices performing relaying, according to an embodiment.

Referring to FIG. 12, the relaying may occur on D2R links and R2D links. That is, for D2R relaying, a signal may be relayed from an ambient IoT device 1201, through a neighboring ambient IoT device 1202, to a reader (e.g., a UE) 1203. Similarly, for R2D relaying, a signal may be relayed from the reader 1203, through the neighboring ambient IoT device 1202, to the ambient IoT device 1201.

Relaying may be from a higher layer (i.e., layer 2 (L2)/layer 2 (L3) relaying).

### Relay selection:

Relay selection may be based on various aspects. For example, an ambient IoT device selected for relaying may be selected based on its device type. That is, only Device Type-2a or Device Type-2b may be selected for relaying since Device Type-1 has limited capabilities.

In addition, relay selection may also be based on previous measurements on D2R or R2D links. For example, a reader may perform RSSI/RSRP/RSRQ measurements on R2D links and then accordingly select ambient IoT devices to perform the relaying. The reader may select a device with relatively low channel measurements to ensure sufficient separation between the reader and the device and accordingly increase coverage.

Alternatively, relay selection may be based on ambient IoT devices with measurements above a threshold such that they have good channel conditions and are able to receive a relayed message correctly.

Relay selection may also be based on a location of an ambient IoT device with respect to a reader. For example, a reader may require a relay in a specific direction to combat bad channel conditions due to an obstacle that prevents line of sight communication. In such a case, the reader can select a relay from the ambient IoT devices located in this direction.

### Relay triggering:

Relay triggering may be implicit or explicit. For example, in R2D control signaling, a reader may include a one bit field to indicate a request for relaying.

Alternatively, the relaying request may be implicit indicated by setting one or more fields to specific values that are either specified or pre-configured, e.g., by using a reserved ambient IoT device ID or a specific preamble.

In addition, a relaying trigger may be unicast to specific ambient IoT devices (e.g., by including their IDs) or may be broadcast to all neighboring ambient IoT devices by using a broadcast ID or a groupcast ID.

Alternatively, a relaying trigger may be based on device location in the sense that a reader may include its location and a specific minimum/maximum distance. If a minimum distance is provided, then ambient IoT devices beyond this range may be required to perform relaying, and if a maximum distance is provided, then ambient IoT devices within this range may be required to perform relaying.

A relaying trigger may also be based on measured signal strength by an ambient IoT device, wherein ambient IoT device will be triggered if a measured signal strength is above a pre-configured/specified threshold.

### Relayed message contents:

When acting as a relay, an ambient IoT device may temporarily act as a reader and forward a complete received message. This relaying may occur on D2R or R2D links based on an indication from a reader in R2D control signaling, DCI signaling, or SCI signaling. In this case, the ambient IoT device may relay the messages sent from the neighboring ambient IoT devices to the reader or from the reader to the neighboring ambient IoT devices.

### Resources used for relayed message:

When selecting resources to perform relaying, a relay may use D2R or R2D channels. In particular, when relaying a message originating from a reader, a relaying ambient IoT device may use a PRDCH, whereas when relaying a message originating from a neighboring ambient IoT device, the relaying ambient IoT device may use a PDRCH.

### Termination of relaying:

Termination of relaying may depend on multiple factors. For example, relaying may last for a specified or pre-configured duration.

Alternatively, relaying may be based on a device type. For example, a Device Type-2a may perform relaying for a first duration after activation, whereas a Device Type-2b may perform relaying for a second duration, e.g., 2x as long as first duration, after activation.

Termination of relaying may also be dependent upon a stored power level of an ambient IoT device. For example, when the stored power level drops below a threshold, then the relaying may be terminated.

In some cases, relaying may be dependent only on backscattering and does not consider power amplification. In these cases, the stored power level may not impact the relaying termination decision.

In accordance with the above-described embodiments, a reader may request relaying by a neighboring ambient IoT device through R2D control signaling in a PRDCH. A relaying trigger may include a relaying device ID as well as device IDs of neighboring ambient IoT devices that will have their signals relayed.

A reader can select a relaying device based on its type, location, previous measurements, etc.

A reader can trigger relaying from a neighboring ambient IoT device using implicit (e.g., by using a reserved ID or preamble) or explicit triggering (by using a dedicated field in PRDCH control signaling).

Ambient IoT device relaying may occur on D2R or R2D links by indication from a reader. Subsequently, the ambient IoT relaying device may use resources on a PRDCH or PDRCH based on the indication.

Additionally, ambient IoT device relaying may be terminated based on explicit signaling from a reader, implicitly (e.g., based on an internal timer), or based on a device type and/or power level.

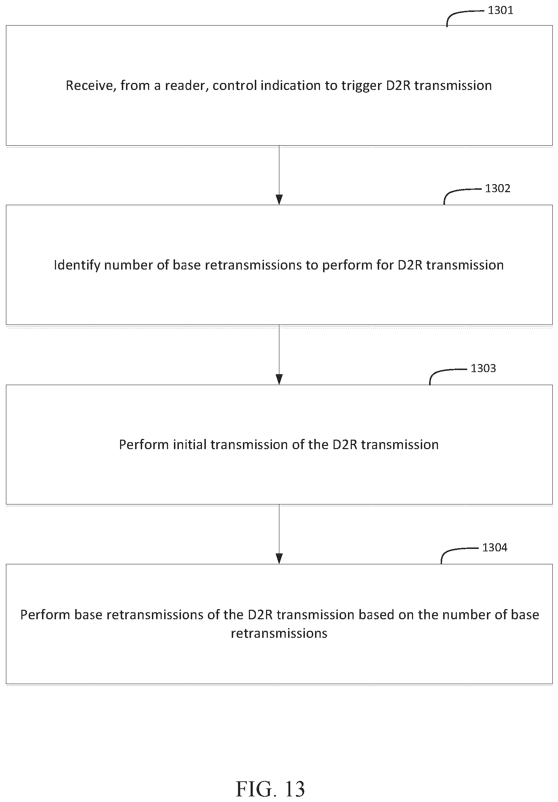

FIG. 13 is a flow chart illustrating a method performed by an ambient IoT device, according to an embodiment.

Referring to FIG. 13, in step 1301, the ambient IoT device receives, from a reader, a control indication to trigger a D2R transmission.

In step 1302, the ambient IoT device identifies a number of base retransmissions to perform for the D2R transmission.

In step 1303, the ambient IoT device performs an initial transmission of the D2R transmission.

In step 1304, the ambient IoT device performs base retransmissions of the D2R transmission based on the number of base retransmissions.

As described above, consecutive base retransmissions among the base retransmissions of the D2R transmission are separated from each other by a time domain interval based on a CW energy harvesting ability of the ambient IoT device.

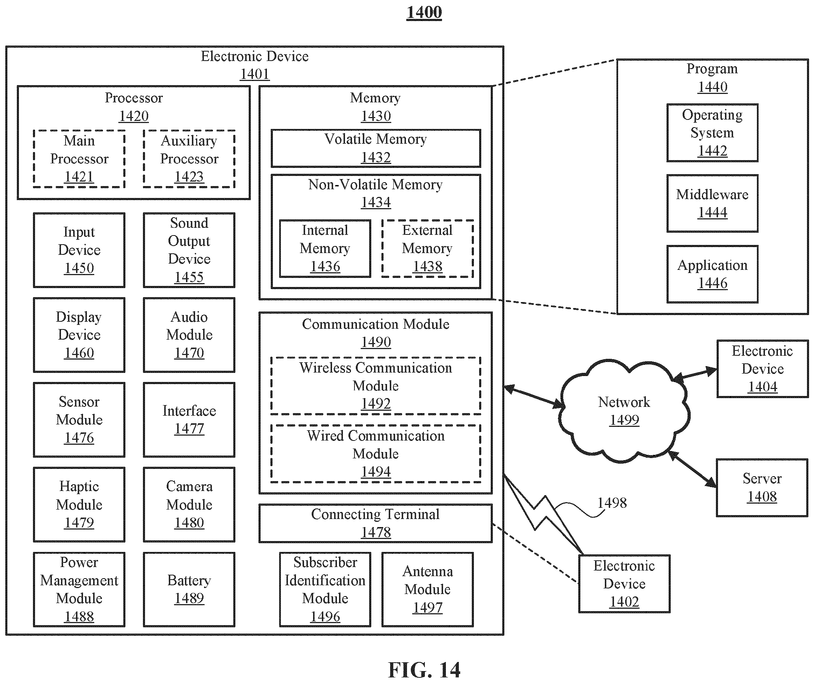

FIG. 14 is a block diagram of an electronic device in a network environment 1400, according to an embodiment.

Referring to FIG. 14, an electronic device 1401 in a network environment 1400 may communicate with an electronic device 1402 via a first network 1498 (e.g., a short-range wireless communication network), or an electronic device 1404 or a server 1408 via a second network 1499 (e.g., a long-range wireless communication network). The electronic device 1401 may communicate with the electronic device 1404 via the server 1408. The electronic device 1401 may include a processor 1420, a memory 1430, an input device 1450, a sound output device 1455, a display device 1460, an audio module 1470, a sensor module 1476, an interface 1477, a haptic module 1479, a camera module 1480, a power management module 1488, a battery 1489, a communication module 1490, a subscriber identification module (SIM) card 1496, or an antenna module 1497. In one embodiment, at least one (e.g., the display device 1460 or the camera module 1480) of the components may be omitted from the electronic device 1401, or one or more other components may be added to the electronic device 1401. Some of the components may be implemented as a single integrated circuit (IC). For example, the sensor module 1476 (e.g., a fingerprint sensor, an iris sensor, or an illuminance sensor) may be embedded in the display device 1460 (e.g., a display).

The processor 1420 may execute software (e.g., a program 1440) to control at least one other component (e.g., a hardware or a software component) of the electronic device 1401 coupled with the processor 1420 and may perform various data processing or computations. For example, the processor 1420 may execute software to control at least one other component of the electronic device 2101 to perform the operations illustrated in FIG. 7A, 7B, 8A, 8B, or 13.

As at least part of the data processing or computations, the processor 1420 may load a command or data received from another component (e.g., the sensor module 1476 or the communication module 1490) in volatile memory 1432, process the command or the data stored in the volatile memory 1432, and store resulting data in non-volatile memory 1434. The processor 1420 may include a main processor 1421 (e.g., a central processing unit (CPU) or an application processor (AP)), and an auxiliary processor 1423 (e.g., a graphics processing unit (GPU), an image signal processor (ISP), a sensor hub processor, or a communication processor (CP)) that is operable independently from, or in conjunction with, the main processor 1421. Additionally or alternatively, the auxiliary processor 1423 may be adapted to consume less power than the main processor 1421, or execute a particular function. The auxiliary processor 1423 may be implemented as being separate from, or a part of, the main processor 1421.

The auxiliary processor 1423 may control at least some of the functions or states related to at least one component (e.g., the display device 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). The auxiliary processor 1423 (e.g., an image signal processor or a communication processor) may be implemented as part of another component (e.g., the camera module 1480 or the communication module 1490) functionally related to the auxiliary processor 1423.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434. Non-volatile memory 1434 may include internal memory 1436 and/or external memory 1438.

The program 1440 may be stored in the memory 1430 as software, and may include, for example, an operating system (OS) 1442, middleware 1444, or an application 1446.

The input device 1450 may receive a command or data to be used by another component (e.g., the processor 1420) of the electronic device 1401, from the outside (e.g., a user) of the electronic device 1401. The input device 1450 may include, for example, a microphone, a mouse, or a keyboard.

The sound output device 1455 may output sound signals to the outside of the electronic device 1401. The sound output device 1455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1460 may visually provide information to the outside (e.g., a user) of the electronic device 1401. The display device 1460 may include, for example, a display, a hologram device, or a projector and control circuitry to control a corresponding one of the display, hologram device, and projector. The display device 1460 may include touch circuitry adapted to detect a touch, or sensor circuitry (e.g., a pressure sensor) adapted to measure the intensity of force incurred by the touch.

The audio module 1470 may convert a sound into an electrical signal and vice versa. The audio module 1470 may obtain the sound via the input device 1450 or output the sound via the sound output device 1455 or a headphone of an external electronic device 1402 directly (e.g., wired) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. The sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device 1402 directly (e.g., wired) or wirelessly. The interface 1477 may include, for example, a high- definition multimedia interface (HDMI), a universal serial bus (USB) interface, a secure digital (SD) card interface, or an audio interface.

A connecting terminal 1478 may include a connector via which the electronic device 1401 may be physically connected with the external electronic device 1402. The connecting terminal 1478 may include, for example, an HDMI connector, a USB connector, an SD card connector, or an audio connector (e.g., a headphone connector).

The haptic module 1479 may convert an electrical signal into a mechanical stimulus (e.g., a vibration or a movement) or an electrical stimulus which may be recognized by a user via tactile sensation or kinesthetic sensation. The haptic module 1479 may include, for example, a motor, a piezoelectric element, or an electrical stimulator.

The camera module 1480 may capture a still image or moving images. The camera module 1480 may include one or more lenses, image sensors, image signal processors, or flashes. The power management module 1488 may manage power supplied to the electronic device 1401. The power management module 1488 may be implemented as at least part of, for example, a power management integrated circuit (PMIC).

The battery 1489 may supply power to at least one component of the electronic device 1401. The battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the AP) and supports a direct (e.g., wired) communication or a wireless communication. The communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as BLUETOOTH^{™} wireless-fidelity (Wi-Fi) direct, or a standard of the Infrared Data Association (IrDA)) or the second network 1499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The antenna module 1497 may transmit or receive a signal or power to or from the outside (e.g., the external electronic device) of the electronic device 1401. The antenna module 1497 may include one or more antennas, and, therefrom, at least one antenna appropriate for a communication scheme used in the communication network, such as the first network 1498 or the second network 1499, may be selected, for example, by the communication module 1490 (e.g., the wireless communication module 1492). The signal or the power may then be transmitted or received between the communication module 1490 and the external electronic device via the selected at least one antenna.

Commands or data may be transmitted or received between the electronic device 1401 and the external electronic device 1404 via the server 1408 coupled with the second network 1499. Each of the electronic devices 1402 and 1404 may be a device of a same type as, or a different type, from the electronic device 1401. All or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1401. The electronic device 1401 may provide the outcome, with or without further processing of the outcome, as at least part of a reply to the request. To that end, a cloud computing, distributed computing, or client-server computing technology may be used, for example.

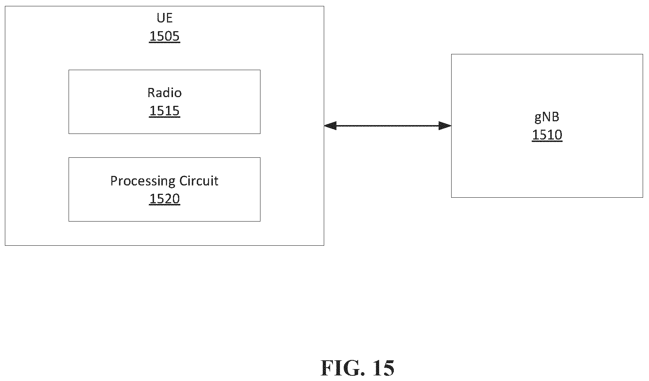

FIG. 15 shows a system including a UE 1505 and a gNB 1510, in communication with each other. The UE may include a radio 1515 and a processing circuit (or a means for processing) 1520, which may perform various methods disclosed herein, e.g., the method illustrated in FIG. 7A, 7B, 8A, 8B, or 13. For example, the processing circuit 1520 may receive, via the radio 1515, transmissions from the network node (gNB) 1510, and the processing circuit 1520 may transmit, via the radio 1515, signals to the gNB 1510.

In accordance with the above-described embodiments, likelihood of collisions between neighboring ambient IoT device transmissions may be decreased, thus improving the overall system reliability and allowing sufficient time for energy harvesting between consecutive transmissions. For example, an adjustment of a minimum time separation between consecutive transmissions ensures that ambient IoT devices have enough time for energy harvesting. Also, adjustment of a minimum time separation between consecutive retransmissions within a hopping pattern allows ambient IoT devices to have sufficient time for energy harvesting.

Further, overhead may be reduced while maintaining reliability of control signaling portions of D2R transmissions.

Additionally, signaling overhead/latency involved in ACK/NACK feedback transmissions may be reduced by considering a pre-configured number of base retransmissions for each D2R transmission.

Power saving and interference reduction are provided by allowing an ambient IoT device to request transmissions and/or power-adjustments of CW signals from neighboring nodes based on their current requirements (e.g., the CW signals are not continuously transmitted if not needed from all nodes).

D2R transmissions may be combined at a reader to improve D2R reliability. Further, the reliability of D2R transmissions may be improved by exploiting frequency diversity between retransmissions.

Interference may be reduced and resource utilization may be improved by using an early termination message to avoid unnecessary D2R retransmissions.

Further, the reliability of D2R transmission may be improved by allowing ambient IoT devices to relay signals of their neighboring devices.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method performed by an ambient Internet of things, IoT, device, the method comprising:
receiving (1301), from a reader, a control indication to trigger a device to reader, D2R, transmission;
identifying (1302) a number of base retransmissions to perform for the D2R transmission;
performing (1303) an initial transmission of the D2R transmission; and
performing (1304) base retransmissions of the D2R transmission based on the number of base retransmissions,
wherein consecutive base retransmissions among the base retransmissions of the D2R transmission are separated from each other by a time domain interval based on a carrier wave, CW, energy harvesting ability of the ambient IoT device.

2. The method of claim 1, further comprising:
determining whether transmission power for performing the initial transmission of the D2R transmission is indicated or pre-configured by the reader; and
utilizing the transmission power indicated or pre-configured by the reader, in response to determining that the transmission power is indicated or pre-configured by the reader.

3. The method of claim 2, wherein, in response to determining that the transmission power is not indicated or pre-configured by the reader, the method further comprises:
randomly selecting the transmission power from a pre-configured transmission power range; or
selecting the transmission power based on at least one of measurements performed on reader to device, R2D, signaling, a device type, a device energy storage level, a device location, a payload size, a payload priority, or a reader type.

4. The method of any one of claims 1 to 3, wherein identifying the number of base retransmissions to perform for the D2R transmission comprises:
determining whether the number of base retransmissions to perform for the D2R transmission is indicated or pre-configured by the reader; and
utilizing the number of base retransmissions indicated or pre-configured by the reader, in response to determining that the number of base retransmissions to perform for the D2R transmission is indicated or pre-configured by the reader.

5. The method of claim 4, further comprising selecting the number of base retransmissions from a configured set, in response to determining that the number of base retransmissions to perform for the D2R transmission is not indicated or pre-configured by the reader.

6. The method of claim 5, wherein selecting the number of base retransmissions comprises:
randomly selecting the number of base retransmissions from the configured set; or
selecting the number of base retransmissions from the configured set based on at least one of a device type of the ambient IoT device, a payload size, a payload priority, measurements performed by the reader, a location of the ambient IoT device with respect to the reader, or a reader type.

7. The method of any one of claims 1 to 6, further comprising:
receiving, from the reader, an early termination message prior to performing all of the number of base retransmissions; and
canceling performance of any subsequent base retransmissions yet to be performed among the number of base retransmissions, in response to the early termination message.

8. The method of any one of claims 1 to 7, further comprising:
receiving, from the reader, an indication that the D2R transmission was not successfully received after performing all of the number of base retransmissions;
identifying a number of additional retransmissions to perform for the D2R transmission, in response to the indication that D2R transmission was not successfully received; and
performing at least one additional retransmission of the D2R transmission based on the number of additional retransmissions.

9. The method of claim 8, wherein identifying the number of additional retransmissions to perform for the D2R transmission comprises:
determining whether the number of additional retransmissions to perform for the D2R transmission is indicated or pre-configured by the reader; and
utilizing the number of additional retransmissions indicated or pre-configured by the reader, in response to determining that the number of additional retransmissions to perform for the D2R transmission is indicated or pre-configured by the reader.

10. The method of claim 9, further comprising selecting the number of additional retransmissions from a configured set, in response to determining that the number of additional retransmissions to perform for the D2R transmission is not indicated or pre-configured by the reader.

11. The method of claim 10, wherein selecting the number of additional retransmissions comprises:
randomly selecting the number of additional retransmissions from the configured set; or
selecting the number of additional retransmissions from the configured set based on at least one of a device type of the ambient IoT device, a payload size, a payload priority, measurements performed by the reader, a location of the ambient IoT device with respect to the reader, or a reader type.

12. The method of any one of claims 1 to 11, wherein the time domain interval is semi-statically configured to the ambient IoT device or is dynamically indicated to the ambient IoT device by the reader.

13. The method of claim 12, wherein the time domain interval is semi-statically configured to the ambient IoT device based on a device type of the ambient IoT device, and
wherein the time domain interval is dynamically indicated to the ambient IoT device by the reader based on at least one of the device type of the ambient IoT device, a location of the ambient IoT device with respect to the reader, or a channel condition between the ambient IoT device and the reader.

14. The method of any one of claims 1 to 13, further comprising determining whether received CW power is sufficient for performing the initial transmission of the D2R transmission or the base retransmissions of the D2R transmission at a targeted transmit power; and
transmitting a CW transmission request to at least one neighboring node, in response to determining that the received CW power is not sufficient for performing the initial transmission of the D2R transmission or the base retransmissions of the D2R transmission at the targeted transmit power.

15. The method of claim 14, wherein the CW transmission request triggers the at least one neighboring node to perform a new CW transmission.
